# EUROPEAN PATENT APPLICATION

(11) **EP 4 012 943 A1**
(43) Date of publication of application: **15.06.2022**
(21) Application number: 20213729.5
(22) Date of filing: 14.12.2020
(51) Int. Cl.: H04B 10/11, H04B 10/70

(54) **METHOD FOR SPATIAL FILTERING OF A QUANTUM SIGNAL FOR FREE-SPACE QUANTUM COMMUNICATION**

(71) Applicant: Fraunhofer-Gesellschaft zur Förderung der angewandten Forschung e.V., 80686 München (DE)
(72) Inventor: Krzic , Andrej, 07745 Jena (DE); Steinlechner, Fabian, 07745 Jena (DE); Berlich, René, 07745 Jena (DE)
(74) Representative: Louis Pöhlau Lohrentz

(57) **Abstract**

It is claimed a method for spatial filtering of a quantum signal (6) for free-space quantum communication, preferably comprising a spatial filter (3), a detection means (4), and a calculation means (5) arranged at a receiver (2), whereas the quantum signal (6) for quantum communication is sent via a free-space channel (20) to the receiver (2), and whereas the quantum signal (6) is spatially filtered by the spatial filter (3), in order to reduce the background noise in the quantum signal (6), and whereas the quantum signal (6) is detected by the detection means (4), and whereas a performance metric is calculated from the spatially filtered and detected quantum signal (6) by the calculation means (5). According to the invention, the spatial filter (3) is an adjustable spatial filter (3), and the adjustable spatial filter (3) is adjusted by the calculation means (5) in order to optimize the performance metric of the quantum signal (6).

## Description

The present invention provides a method for spatial filtering of a quantum signal for a free-space quantum communication according to the preamble of claim 1 and a system for spatial filtering of a quantum signal for a free-space quantum communication according to the preamble of claim 13.

Optical communication links, for example via a satellite, serve to overcome the distance limitations of terrestrial fiber-based communication systems. One of the main technological challenges in the realization of quantum communication protocols is to overcome noise that would otherwise mask the quantum features of the transmitted signal. The main noise sources are straylight leading to a constant background noise that reduces the signal to noise ratio or even completely saturates the detection system at the receiver. This limitation has often restricted quantum communication with satellites to night-time-operation.

To reduce background noise different solutions like spatial filtering, an adaptive optical system, single-mode coupling, high-dimensional quantum communication protocols, temporal filtering or spectral filtering are known. All these solutions reduce the duty cycle or the key rate of the communication or are cost intensive.

It is an object of the present invention to provide a secure, improved, and cost-efficient method and system for spatial filtering in a free-space quantum communication.

According to the present invention, a method of spatial filtering for a free-space quantum communication is provided according to claim 1.

This object is achieved by a method for spatial filtering of a quantum signal for free-space quantum communication, preferably comprising a spatial filter, a detection means, and a calculation means arranged at a receiver, whereas the quantum signal for quantum communication is sent via a free-space channel to the receiver, and whereas the quantum signal is spatially filtered by the spatial filter, in order to reduce the background noise in the quantum signal, and whereas the quantum signal is detected by the detection means, and whereas a performance metric is calculated from the spatially filtered and detected quantum signal by the calculation means. According to the invention, the spatial filter is an adjustable spatial filter, and the adjustable spatial filter is adjusted by the calculation means in order to optimize the performance metric of the quantum signal.

The object is further achieved by a system for spatial filtering of a free-space quantum communication according to claim 13.

The object is further achieved by a system for spatial filtering of a quantum signal for free-space quantum communication with a receiver for the quantum signal of the quantum communication, whereas the receiver comprises a spatial filter for the reduction of background noise in the quantum signal, and a detection means for the detection of the quantum signal, and a calculation means for the calculation of a performance metric of the spatially filtered quantum signal. According to the invention, the spatial filter is an adjustable spatial filter, and the detection means, the calculation means and the adjustable spatial filter are connected in order to form an adjustment loop to optimize the performance metric of the quantum signal.

By the inventive method and the inventive system, the spatial filter is adjusted according to the changing link and noise conditions, leading to a lower background noise level and thus to a higher signal to noise ratio in the quantum signal and allowing a higher duty cycle of the quantum communication, whenever possible. The adjustable spatial filter adapts to the link and noise-conditions, even when the conditions change during the quantum communication, that means while the quantum signal is being received. With a static spatial filter in known systems, a response to changed link and noise conditions is not possible. The inventive method and inventive system actively adjust the filtering by the adjustable spatial filter to an optimum configuration for the quantum communication performance metric. This is possible by the automatic adaptation to the link and noise conditions. By the lower background noise level in the signal the signal to noise ratio is increased, increasing the communication performance.

The changing noise condition can occur by unwanted straylight sources, for example by the sun or moon or by straylight sources on the ground like cities, street lights, or even cars. The changing link condition can occur by turbulences in the atmosphere, caused by boundary layers in the atmosphere influenced by the ground and/or heat sources leading to regions with different indices of refraction. A plane wave at a transmitter is refracted by passing through the regions with different indices of refraction leading to aberrated wavefront of the optical signal at the receiver. Changing link condition can lead to coupling of additional straylight into the signal.

Performance metric is a value of the technical quality of the quantum signal for quantum communication. In a preferred embodiment, the performance metric is the signal to noise ratio (SNR), or the quantum bit error rate (QBER), or the secure key rate (SKR), or another quantum communication value to describe the quality of the quantum signal for quantum communication.

In a preferred embodiment, the adjustment of the adjustable spatial filter separates the optical signal from the background noise and/or straylight, preferably by geometrical filtering of the optical signal, and/or separation of the on-axis optical signal from the off-axis background noise and/or straylight.

In a preferred embodiment, the adjustment of the adjustable spatial filter can be performed by an electrical signal or an electrical control variable. Preferably the adjustable spatial filter is an electrically adjustable spatial filter.

In a preferred embodiment, the connection between the detection means, the calculation means and the adjustable spatial filter can be a wired connection or, at least partially, a wireless connection.

In a preferred embodiment, the optimization of the performance metric of the quantum signal is performed in way to increase or improve the signal to noise ratio (SNR), or the quantum bit error rate (QBER), or the secure key rate (SKR), or another quantum communication value to describe the quality of the detected quantum signal part for quantum communication.

In a preferred embodiment, the optimization of the performance metric of the quantum communication is realized by spatial filtering of the optical signal from the background noise and/or straylight, preferably by geometrical filtering of the optical signal, and/or separation of the on-axis optical signal from the off-axis background noise and/or straylight.

In a preferred embodiment, the adjustable spatial filter comprises one or more adjustable filter means. In a preferred embodiment, the adjustment in order to optimize the performance metric is realized by one or more adjustable filter means. Preferably, the adjustable spatial filter, preferably the one or more adjustable filter means, influences the brightness of the image on the detection means and/or the size of the field of view of the detection means, whereas a first adjustable filter means can influence the brightness and/or a second adjustable filter means can influence the field of view. Preferably, the adjustable spatial filter comprises in addition a focusing means and a collimation means.

In a preferred embodiment, the one or more adjustable filter means is adjusted in order to decrease the noise in the detected signal, preferably by increasing the signal to noise ratio.

In a preferred embodiment, the adjustable filter, preferably the one or more adjustable filter means, is an adjustable iris aperture or adjustable ring aperture, preferably motorized or piezo based aperture, and/or a Spatial Light Modulator (SLM), and/or a micro-opto-mechanic mirror system (MEMS) and/or an electrical aperture or screen, and/or liquid apertures or liquid lenses, and/or electro-optical modulator (EOM) or acousto-optical modulator (AOM). In a preferred embodiment, the adjustment in order to optimize the performance metric is realized by the adjustable filter, preferably the one or more adjustable filter means, designed as an adjustable iris aperture or adjustable ring aperture, preferably motorized or piezo based aperture, and/or a Spatial Light Modulator (SLM), and/or a micro-opto-mechanic mirror system (MEMS) and/or an electrical aperture or screen, and/or liquid apertures or liquid lenses, and/or electro-optical modulator (EOM) or acousto-optical modulator (AOM).

In a preferred embodiment, the electrical aperture or screen comprise multiple areas or a matrix of areas in order to allow or suppress the transmission or reflection individually for each area. The advantage of the electrical aperture or screen is that selected areas with straylight can be suppressed individually.

In a preferred embodiment, the adjustable filter, preferably the one or more adjustable filter means, is an adjustable transmission means, and/or an adjustable reflection means. In a preferred embodiment, the adjustment in order to optimize the performance metric is realized by the adjustable filter, preferably by the one or more adjustable filter means, by a change of the transmission through the adjustable filter or filter means, and/or a change of the reflection on the adjustable filter or filter means.

In a preferred embodiment, the one or more adjustable filter means can be arranged in a telescope, preferably in a housing of a telescope, or in a lens arrangement and/or upstream or downstream of an optical lens.

In a preferred embodiment, the adjustable filter means is arranged in the focus of the focusing means and the collimation means, and/or in the focus of a receiving telescope, and/or in the collimated beam of the quantum signal, preferably in front or behind the focusing means and a collimation means or the receiving telescope.

In a preferred embodiment, the adjustable filter means is a field aperture, also called field stop or field of view diaphragm, preferably located in the focus of the focusing means and/or a collimation means, and/or in the focus of a receiving telescope. In a preferred embodiment, by the adjustable filter means the field of view is adjusted, preferably the field of view of the detection means. The field aperture within the optical system determines the section of the object plane that is imaged into the image field and thus influences the size of the field of view. Preferably the field aperture is adjusted in order to increase the signal to noise ratio, preferably by a reduction of the noise in the detected signal.

In a preferred embodiment, the adjustable filter means is an aperture, also called aperture stop or aperture diaphragm or opening diaphragm, preferably located in front or behind the focusing means and/or a collimation means or the receiving telescope, preferably located in a collimated beam of the optical signal. In a preferred embodiment, by the adjustable filter means the aperture angle of the beam of rays emanating from the object point are adjusted. The aperture diaphragm determines the aperture angle of the beam of rays emanating from the object point. A large aperture angle of the beam of rays emanating from the object point leading to a higher probability for straylight to couple into the optical signal beam. The aperture diaphragm is traversed by all imaging ray bundles in its entire diameter. A change here thus affects all pixels to the same extent. Therefore, this aperture remains invisible in the image plane. The aperture diaphragm is an invisible diaphragm in relation to the image plane for regulating the incidence of light and influences the depth of field.

In a preferred embodiment, the adjustable spatial filter comprises a field aperture and an aperture stop, preferably a first adjustable filter means as a field aperture and a second adjustable filter means as an aperture stop.

In a preferred embodiment, the separation of the on-axis optical signal from the off-axis straylight is realized in addition to the adjustable filter means by an optical vortex phase element, preferably a phase plate and/or a Spatial Light Modulator (SLM). Preferably the optical vortex phase element is arranged in the focus point of the focusing means and the collimation means in order to separate the on-axis optical signal from the off-axis straylight. The optical vortex phase element diffracts on-axis beams meeting the optical vortex phase element in the middle more than off-axis beams meeting the optical vortex phase element outside of the middle. This leads to a larger diffraction of the on-axis beams and thus to a separation of the on-axis optical signal from the off-axis straylight. The separated off-axis straylight is then blocked by the adjustable filter means located behind the optical vortex phase element. On-axis means signal sent via the free-space channel from the transmitter to the receiver and guided in the receiver telescope parallel to the optical axis of the receiver telescope. Off-axis means straylight emitted from a source located not at the transmitter so that it is collected in the receiver telescope not parallel to the optical axis of the receiver telescope.

In a preferred embodiment, the focusing means and a collimation means are optical elements of a receiver telescope or additional optical elements to the receiver telescope, preferably are lenses, and/or lens systems, and/or mirrors and/or mirror systems.

In a preferred embodiment, the geometrical filtering is realized by the change of the inner and/or outer diameter of the spatial filter, and/or by the suppression of the transmission or reflection of selected areas of the adjustable spatial filter, preferably by the adjustable filter means designed as a field aperture and/or designed as an aperture, also called aperture stop.

In a preferred embodiment, the adjustment of the spatial filter is realized by a change of a value of the adjustable spatial filter,
- first, in an arbitrary direction, and calculation of the new performance metric, and comparison of the old and the new performance metric, and
- second, proceed the adjustment in this direction when the new performance metric is better, or change the direction when the new performance metric is worse. Better or worse means here, that the new performance metric compared to the old performance metric indicates a better or worse technical quality of the received quantum signal.

In a preferred embodiment, the adjustable spatial filter is arranged in the transmission path of the quantum signal, preferably in the transmission path from a transmitter to the receiver.

In a preferred embodiment, the focusing means comprises an optical focus means in order to focus the quantum signal, preferably a lens, and/or a lens system, and/or a mirror.

In a preferred embodiment, the collimation means comprises an optical collimation means in order to collimate the quantum signal, preferably a lens, and/or a lens system, and/or a mirror.

In a preferred embodiment, the optical focusing means and/or the optical collimation means are focusing means and/or collimation means of the receiving telescope, or are additional optical components behind or in front of the receiving telescope. In a preferred embodiment, the adjustable aperture element is arranged in the focal plane of the receiving telescope or is arranged in the focal plane of the additional optical components behind or in front of the receiving telescope.

In a preferred embodiment, the quantum signal comprises a communication signal part, or a communication signal part and an adaptation signal part. Preferably, the adaptation signal part is a quantum signal or a classical signal.

In a preferred embodiment, the communication signal part and the adaptation signal part have a combination and/or separation parameter in order to combine and/or separate the communication part and the adaptation part at the transmitter and/or the receiver, preferably the combination and/or separation parameter is the time, and/or the wavelength, and/or the polarization, and/or spatial mode. Preferably, the communication signal part and the adaptation signal part can be transmitted in the free-space channel at the same time or time-shifted to each other. Preferably, the communication signal part and the adaptation signal part are sent via the same free-space channel.

In a preferred embodiment, the communication signal part and/or the adaptation signal part comprises more sequences of each part, preferably communication signal sequences and/or adaptation signal sequences. Sequences means here, that the communication signal part and/or the adaptation signal part is divided into individual pieces. The advantage of more sequences is, that the performance metric can be calculated for one sequence in order to adjust the spatial filter for the following sequence. In a preferred embodiment, the performance metric is calculated out of one sequence of the communication signal part or adaptation signal part in order to adjust the spatial filter for the following sequence of the communication signal part.

The communication signal part is used only for communication, or is used for communication and for the adaptation meaning the calculation of the performance metric, preferably by a calculation directly out of the communication protocol. When the communication signal part is used only for communication the adaptation signal part is used for the calculation of the performance metric. The adaptation signal part is used only for the calculation of the performance metric of the quantum signal.

In a preferred embodiment, the quantum signal, preferably the communication signal part, is a multitude of quantum states of light, or single photon states, or faint laser pulses, preferably single photons, or entangled photon states, preferably entangled photons of entangled photon pairs or multi-entangled states.

In a preferred embodiment, the adaptation signal part, is a multitude of quantum states of light, or single photon states, or faint laser pulses, preferably single photons, or entangled photon states, preferably entangled photons of entangled photon pairs or multi-entangled states, or a classical signal, preferably a light beam, or a laser beam, or a pulse of a laser beam.

In a preferred embodiment, the entangled photon states are entangled in polarization, and/or time, and/or frequency, and/or orbital angular momentum (OAM) or spin angular momentum (SAM).

In a preferred embodiment, a quantum communication protocol can be used for quantum communication, preferably a high-dimensional quantum communication protocol. The quantum communication protocol can be a BB84 or SARG04 or any other Quantum Key Distribution (QKD) protocol with or without decoy states, or BBM92 or any other entanglement-based protocol, or a high dimensional Quantum Key Distribution (QKD) protocol, or any information processing task relying on the distribution and transmission of quantum states. The advantage of a high-dimensional quantum communication protocol is that higher noise level can be tolerated.

In a preferred embodiment, in addition to the spatial filtering temporal filtering and/or spectral filtering of the quantum signal is used. Preferably the temporal filtering is realized by a mechanical or electrical shutter or by the analysis of the detected quantum signal preferably in the calculation means. Preferably the spectral filtering is realized by a spectral filter, preferably in front of the detection means. The additional filtering can be used in combination with the spatial filtering to reduce background noise.

In a preferred embodiment, in addition to the spatial filtering an adaptive angle-of-arrival correction is used, in order to reduce the average focal spot size of the quantum signal. Preferably the angle-of-arrival correction is realized by optical elements, preferably by a lens or lens system, and/or a mirror, and/or a fast beam steering mirror. Preferably the angle-of-arrival correction is realized in front of the adjustable spatial filter. Preferably an angle-separation means is located in the beam path of the quantum signal in order to detect the angle-of-arrival in an angle-detection means and preferably an angle-correction means is arranged in the beam path of the quantum signal in order to correct the angle-of-arrival.

In a preferred embodiment, in addition to the spatial filtering an adaptive optics correction is used, in order to reduce the average focal spot size of the quantum signal. Preferably, the adaptive optics correction is realized by an adaptive optics system, preferably with a beacon laser and a wave-front-sensor and a deformable mirror or Spatial Light Modulator (SLM). The adaptive optics system corrects the wavefront distortions of the quantum signal due to the transmission of the quantum signal via the free-space channel.

In a preferred embodiment, in addition to the spatial filtering an adaptive higher order aberration correction is used, in order to reduce the average focal spot size of the quantum signal. Preferably, the adaptive higher order aberration correction is realized by optical elements, preferably by a lens or lens system, and/or a mirror, and/or a deformable mirror. Preferably the adaptive higher order aberration correction is realized in front of the adjustable spatial filter.

In a preferred embodiment, at the receiver, or at the location of the receiver, the spatial filter, the detection means, and the calculation means are arranged.

In a preferred embodiment, the receiver comprises a receiving-telescope, preferably in order to guide the quantum signal to the spatial filter and/or detection means.

In a preferred embodiment, the detection means comprise a communication-detection means, or a communication-detection means and an adaptation-detection means.

In a preferred embodiment, the communication-detection means is used for the detection of the communication signal part and the adaptation signal part.

In a preferred embodiment, the communication-detection means is used for the detection of the communication signal part and the adaptation-detection means is used for the detection of the adaptation signal part or is used for the detection of a straylight source. The detection of a straylight source via the adaptation-detection means can be realized for example by the detection of the sun, or the moon, or any other straylight source, or the position of the sun and the moon, preferably in relation to the field of view of the receiver telescope. Preferably, in order to use the adaptation-detection means for the detection of a straylight source, the optical signal comprises only the communication signal part, meaning no adaptation signal part.

In a preferred embodiment of the detection means comprising the communication-detection means and the adaptation-detection means, the detection means comprises in addition a separation optics in order to separate the communication signal part and the adaptation signal part or the straylight, preferably according to the combination and/or separation parameter of the optical signal. Preferably, the separation optics is used in order to separate the communication signal part and the adaptation signal part or the straylight at the receiver, preferably the separation parameter is the time, and/or the wavelength, and/or the polarization, and/or spatial mode. Preferably, the separation optics is a beam splitter, and/or a dichroic mirror, and/or a shutter, and/or a movable mirror, and/or a fast-steering mirror, and/or a diffraction optic element, preferably a grating. With the optical components, the communication sequences and the adaptation sequences can be separated spatially and detected in the corresponding detection means.

In a preferred embodiment, the communication-detection means detect the polarization and/or time, and/or frequency, and/or orbital angular momentum (OAM) or spin angular momentum (SAM) of the quantum signal, preferably for a bell measurement and/or establish QKD (quantum key distribution) and/or for quantum teleportation and/or for the calculation of the performance metric.

In a preferred embodiment, the adaptation-detection means detect the quantum signal, and/or the polarization and/or time, and/or frequency, and/or orbital angular momentum (OAM) or spin angular momentum (SAM) of the quantum signal, preferably for the calculation of the performance metric, and/or the intensity of the classical signal, and/or the intensity distribution of the classical signal.

In a preferred embodiment, the communication-detection means and/ or adaptation-detection means comprise a bell measurement setup.

In a preferred embodiment, the communication-detection means and/or adaptation-detection means comprise one or more detectors, preferably to measure the photons in at least two mutually unbiased measurement bases, and/or to measure the photons in at least one or more orthogonal states, and/or to measure the area with high noise of straylight in the field of view of the telescope.

In a preferred embodiment, the one or more detectors of the communication-sequences-detection means are single photon detectors, preferably germanium (Ge), or silicon (Si), or germanium on silicon (Ge on Si) single-photon avalanche diode (SPAD), or Indium gallium arsenide (InGaAs/lnp) single photon detectors, or semiconductor-based single-photon avalanche diode (SPAD), or superconducting nanowire single-photon detector (SNSPD), or Silicon Avalanche Photodiodes (Si APD).

In a preferred embodiment, the one or more detectors of the adaptation-sequences-detection means are single photon detectors, preferably germanium (Ge), or silicon (Si), or germanium on silicon (Ge on Si) single-photon avalanche diode (SPAD), or Indium gallium arsenide (InGaAs/Inp) single photon detectors, or semiconductor-based single-photon avalanche diode (SPAD), or superconducting nanowire single-photon detector (SNSPD), or Silicon Avalanche Photodiodes (Si APD), or a photodiode, or an optical power-meter. Preferably, the one or more detectors of the adaptation-sequences-detection means are single photon cameras, preferably electro multiplying charge-coupled devices (EMCCD), or are a multitude of detectors arranged in a matrix. With a detection area or a multitude of detectors covering the hole detection area, preferably by a lens system, it is possible to identify the area with straylight in order to adjust the spatial filter for this area.

In a preferred embodiment, the calculation means is designed as controlling means. The calculation means can comprise a detection logic and/or a CPU, whereas the calculation means receives detection signals from the communication-detection means and/or the adaptation-detection means in order to calculate the performance metric and/or establish a quantum communication.

In a preferred embodiment, the calculation means generates adjustment signals in order to adjust the adjustable spatial filter.

In a preferred embodiment, the quantum signal is generated at a transmitter, preferably generated by a source, preferably located at the transmitter. In a preferred embodiment, the quantum signal is sent/transmitted via the free-space channel from the transmitter to the receiver.

In a preferred embodiment, the source comprises a communication-generation means, or a communication-generation means and an adaptation-generation means.

In a preferred embodiment of the source comprising the communication-generation means and the adaptation-generation means, the source comprises in addition a combining optic in order to combine the communication part and the adaptation part, in order to transmit the communication signal part and the adaptation signal part in the quantum signal via the same free-space channel from the transmitter to the receiver.

Preferably, the combining optic is used in order to combine the communication signal part and the adaptation signal part at the transmitter, preferably the combination parameter is the time, and/or the wavelength, and/or the polarization, and/or spatial mode. Preferably, the combination optic is a beam splitter, and/or a dichroic mirror, and/or a shutter, and/or a movable mirror, and/or a fast-steering mirror, and/or a diffraction optic element, preferably a grating. With the optical components, the communication signal part and the adaptation signal part can be combined spatially and sent via the same free-space channel to the receiver. Preferably, for a time separation parameter, the communication sequences and the adaptation sequences alternate within the time scale of atmospheric fluctuations of 500 ms, preferably 50 ms, preferably 5 ms or faster.

Preferably, free-space channel means here a communication channel in a medium not guiding the photon, for example the atmosphere, or gas, or vacuum, or water.

In a preferred embodiment, the communication-generation means, and/or the adaptation-generation means is a single photon source, or a faint laser pulse source, or an entangled photon source. Preferably generating faint laser pulses and/or single photons, and/or entangled photon pairs, preferably entangled in polarization, an/or time, and/or frequency, and/or orbital angular momentum (OAM) or spin angular momentum (SAM), or for classical communication a light source, or a laser, preferably for the generation of a laser beam or a pulsed laser beam.

In a preferred embodiment, the adaptation-generation means is a light source, or a laser, preferably for the generation of a laser beam or a pulsed laser beam.

In a preferred embodiment, the calculation means and the transmitter, and preferably the source, communicates the time, and/or the frequency and/or the polarization, and/or the orbital angular momentum (OAM) and/or the spin angular momentum (SAM) of the quantum signal, and/or the intensity of the adaptation signal part in order to detect coincidences of an entangled photon pair and/or to calculate the visibility, and/or to establish a QKD (quantum key distribution), and/or to calculate the performance metric.

In a preferred embodiment, the receiver and/or the transmitter are arranged in a satellite, or a ground station, or a mobile ground station. The ground station can be a stationary station for example in a building, the mobile ground station can be a mobile station for example in a car or a truck or a mobile container or a non-stationary building.

In a preferred embodiment, the system for spatial filtering of a quantum signal for free-space quantum communication, is an apparatus comprising a receiver for the quantum signal of the quantum communication, whereas the receiver comprises a spatial filter for the reduction of background noise in the quantum signal, and a detection means for the detection of the quantum signal, and a calculation means for the calculation of a performance metric of the spatially filtered quantum signal, and the spatial filter is an adjustable spatial filter, and the detection means, the calculation means and the adjustable spatial filter form an adjustment loop.

The above and other aspects, features and advantages of the present invention will become more apparent from the following detailed description when taken in conjunction with the accompanying drawings.

### Brief Description of the Drawings:

- Fig. 1:: schematic diagram of the system for spatial filtering of a quantum signal for free-space quantum communication with the transmitter and unwanted straylight sources;
- Fig. 2:: schematic diagram of the inventive adjustable spatial filter;
- Fig. 3:: first example of the inventive adjustable spatial filter as a field aperture;
- Fig. 4:: second example of the inventive adjustable spatial filter as an aperture stop;
- Fig. 5:: third example of the inventive adjustable spatial filter as an aperture stop with a phase plate.

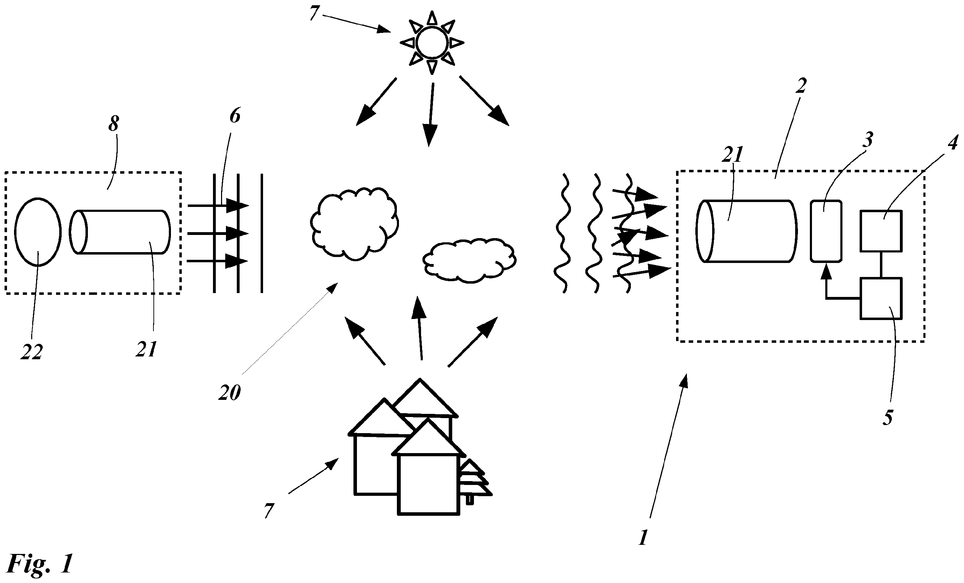

Fig. 1 shows the inventive system 1 for spatial filtering of a quantum signal 6 for free-space quantum communication located at a receiver 2 comprising an adjustable spatial filter 3, a detection means 4 and a calculation means 5. The quantum signal 6 is send via a free-space channel 20 from a transmitter 8 to the receiver 2.

The quantum signal 6 is generated in a source 22 located at the receiver 2 and transmitted via a telescope 21 on the transmitter side in the free-space channel 20 to the receiver 2. Somewhere between the transmitter 8 and the receiver 2 straylight sources 7 can be located, which are in the example of Fig. 1 the source and a city. The straylight sources 7 introduce additional signals into the quantum signal 6 increasing the background noise in the detected quantum signal 6.

The quantum signal 6 is guided in the receiver telescope 21 to the adjustable spatial filter 3. In the example of Fig. 1 the adjustable spatial filter 3 is located behind the receiver telescope 21, but can also be located inside or in front of the receiver telescope 21. Behind the adjustable spatial filter 3 the detection means is located, detecting single photons from the quantum signal 6 and straylight. The detection results are sent to the calculation means 5 in order to calculate the performance metric of the detected signal with the values set at this moment in the adjustable spatial filter 3.

The calculation means 5 controls the adjustable spatial filter 3 by changing the filtering conditions of the adjustable spatial filter 3, for example the size of an iris aperture, and compares the new performance metrics from new detection signals with the before calculated performance metrics. The control is conducted in order to optimize the performance metric of the quantum communication.

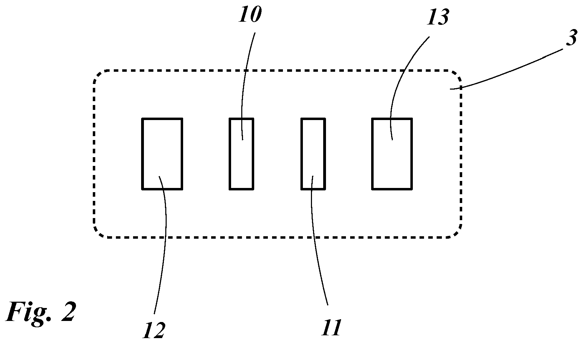

Fig. 2 shows a diagram of the adjustable spatial filter 3. The adjustable spatial filter 3 comprises an adjustable field aperture 10, an adjustable aperture stop 11, a focusing optic 12 and a collimation optic 13. It is also possible, that the adjustable spatial filter 3 comprises only the adjustable field aperture 10 or the adjustable aperture stop 11. The focusing optic 12 focuses the collimated quantum signal 6 send from the transmitter 8. The collimation optic 13 collimates the divergent quantum signal 6 towards the detection means 4.

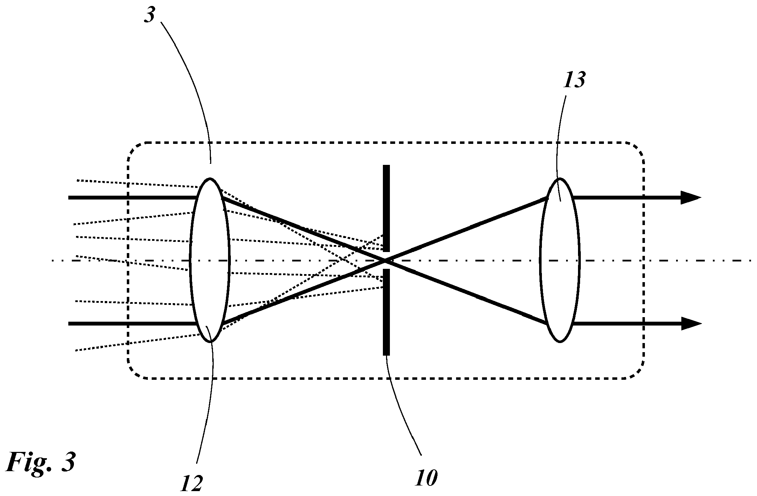

In the Fig. 3, 4 and 5 the quantum signal 6 is depicted as black thick and continuous arrows. The straylight is depicted as thin and dotted lines.

Fig. 3 shows a first example of the adjustable spatial filter 3, comprising the focusing optic 12, the collimation optic 13 and the adjustable field aperture 10 located at the focus of the focusing optic 12. In the example of Fig. 3 the adjustable focus element 10 is an adjustable iris changing the diameter of the iris in order to optimize the performance metric of the quantum signal 6.

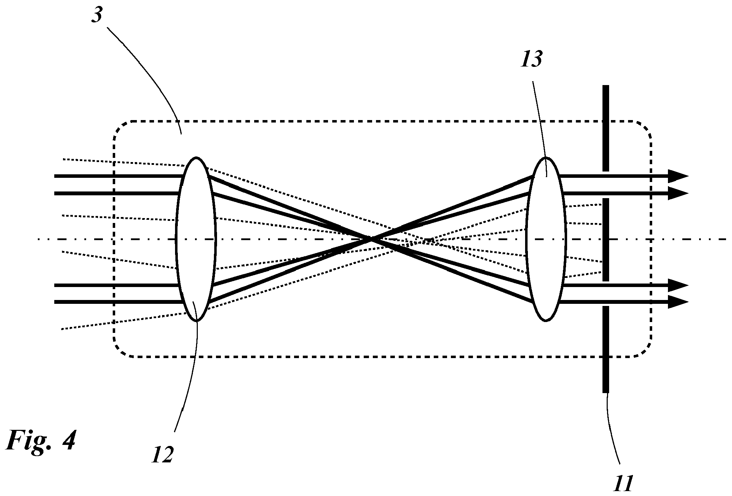

Fig. 4 shows a second example of the adjustable spatial filter 3, comprising the focusing optic 12, the collimation optic 13, and the adjustable aperture stop 11 arranged behind the collimation optic 13 in the collimated quantum signal 6. In the example of Fig. 4 the adjustable aperture stop 11 is an adjustable ring iris changing the inner and/or outer diameter of the ring iris in order to optimize the performance metric of the quantum signal 6.

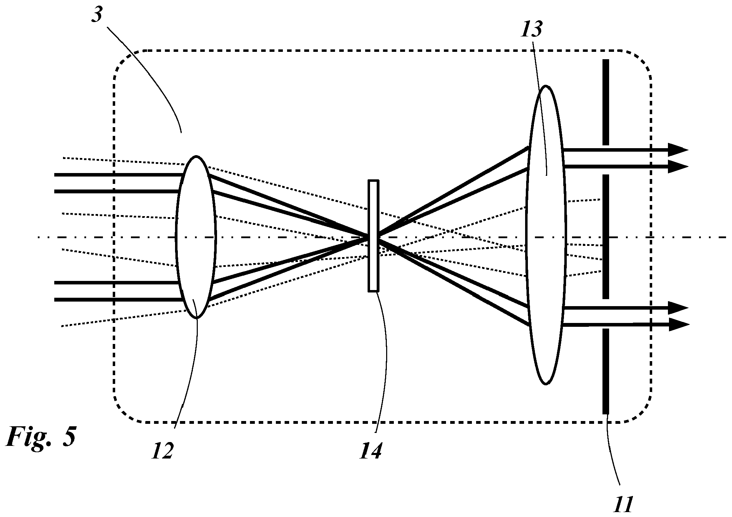

Fig. 5 shows a third example of the adjustable spatial filter 3, comprising the focusing optic 12, the collimation optic 13, a phase plate 14 located at the focus of the focusing optic 12 and the adjustable aperture element 11 arranged behind the collimation optic 13. The phase plate 14 diffracts on-axis beams meeting the phase plate 14 in the middle stronger than off-axis beams meeting the phase plate 14 outside of the middle. As depicted in Fig. 5, the strong diffraction of the on-axis beams leads to a lager diameter of the quantum signal 6 behind the collimation optics 13. In the example of Fig. 5 the adjustable aperture stop 11 is an adjustable ring iris with a larger diameter compared to the ring iris of Fig. 4, changing the inner and/or outer diameter of the ring iris in order to optimize the performance metric of the quantum signal 6.

### Reference signs:

- 1: system for spatial filtering of a quantum signal for free-space quantum communication
- 2: receiver
- 3: adjustable spatial filter
- 4: detection means
- 5: calculation means
- 6: quantum signal
- 7: straylight source
- 8: transmitter
- 10: adjustable field aperture
- 11: adjustable aperture stop
- 12: focusing optic
- 13: collimation optic
- 14: phase plate
- 20: free-space channel
- 21: telescope
- 22: source

## Claims

1. Method for spatial filtering of a quantum signal for free-space quantum communication, preferably comprising a spatial filter (3), a detection means (4), and a calculation means (5) arranged at a receiver (2),
whereas the quantum signal (6) for quantum communication is sent via a free-space channel (20) to the receiver (2), and
whereas the quantum signal (6) is spatially filtered by the spatial filter (3), in order to reduce the background noise in the quantum signal (6), and whereas the quantum signal (6) is detected by the detection means (4), and whereas a performance metric is calculated from the spatially filtered and detected quantum signal (6) by the calculation means (5),
**characterized in that**
the spatial filter (3) is an adjustable spatial filter (3), and
the adjustable spatial filter (3) is adjusted by the calculation means (5) in order to optimize the performance metric of the quantum signal (6).

2. Method according to claim 1,
**characterized in that**
the performance metric is a value of the technical quality of the quantum signal (6) for quantum communication, preferably the performance metric is the signal to noise ratio (SNR), or the quantum bit error rate (QBER), or the secure key rate (SKR), or another quantum communication value to describe the quality of the quantum signal (6) for quantum communication.

3. Method according to one of the claims 1 or 2,
**characterized in that**
the adjustment of the adjustable spatial filter (3) separates the optical signal from the background noise and/or straylight, preferably by geometrical filtering of the optical signal, and/or separation of the on-axis optical signal from the off-axis background noise and/or straylight.

4. Method according to one of the claims 1 to 3,
**characterized in that**
the adjustment of the adjustable spatial filter (3) is performed by an electrical signal or an electrical control variable.

5. Method according to one of the claims 1 to 4,
**characterized in that**
the optimization of the performance metric of the quantum communication is realized by spatial filtering of the optical signal from the background noise and/or straylight, preferably by geometrical filtering of the optical signal, and/or separation of the on-axis optical signal from the off-axis background noise and/or straylight.

6. Method according to one of the claims 1 to 5,
**characterized in that**
the adjustment in order to optimize the performance metric is realized by one or more adjustable filter means.

7. Method according to one of the claims 1 to 6,
**characterized in that**
the separation of the on-axis optical signal from the off-axis straylight is realized in addition to the adjustable filter means by an optical vortex phase element, preferably a phase plate (14) and/or a Spatial Light Modulator (SLM)

8. Method according to one of the claims 1 to 7,
**characterized in that**
the geometrical filtering is realized by the change of the inner and/or outer diameter of the spatial filter (3), and/or by the suppression of the transmission or reflection of selected areas of the adjustable spatial filter (3), preferably by the adjustable filter means designed as a field aperture and/or designed as an aperture, also called aperture stop.

9. Method according to one of the claims 1 to 8,
**characterized in that**
the adjustment of the spatial filter (3) is realized by a change of a value of the adjustable spatial filter (3),
- first, in an arbitrary direction, and calculation of the new performance metric, and comparison of the old and the new performance metric, and
- second, proceed the adjustment in this direction when the new performance metric is better, or change the direction when the new performance metric is worse.

10. Method according to one of the claims 1 to 9,
**characterized in that**
the quantum signal (6) comprises a communication signal part, or a communication signal part and an adaptation signal part.

11. Method according to one of the claims 1 to 10,
**characterized in that**
the quantum signal (6), preferably the communication signal part, is a multitude of quantum states of light, or single photon states, or faint laser pulses, preferably single photons, or entangled photon states, preferably entangled photons of entangled photon pairs or multi-entangled states, preferably the entangled photon states are entangled in polarization, and/or time, and/or frequency, and/or orbital angular momentum (OAM) or spin angular momentum (SAM).

12. Method according to one of the claims 1 to 11,
**characterized in that**
the detection means (4) comprise a communication-detection means, or a communication-detection means and an adaptation-detection means, preferably
the communication-detection means is used for the detection of the communication signal part and the adaptation signal part, or
the communication-detection means is used for the detection of the communication signal part and the adaptation-detection means is used for the detection of the adaptation signal part or is used for the detection of a straylight source.

13. System (1) for spatial filtering of a quantum signal (6) for free-space quantum communication with a receiver (2) for the quantum signal (6) of the quantum communication, whereas the receiver (2) comprises
a spatial filter (3) for the reduction of background noise in the quantum signal (6), and
a detection means (4) for the detection of the quantum signal (6), and
a calculation means (5) for the calculation of a performance metric of the spatially filtered quantum signal (6),
**characterized in that**
the spatial filter (3) is an adjustable spatial filter (3), and
the detection means (4), the calculation means (5) and the adjustable spatial filter (3) are connected in order to form an adjustment loop to optimize the performance metric of the quantum signal (6).

14. System (1) according to claim 13,
**characterized in that**
the adjustable spatial filter (3) comprises one or more adjustable filter means.

15. System (1) according to one of the claims 13 or 14,
**characterized in that**
the adjustable filter, preferably the one or more adjustable filter means, is an adjustable iris aperture or adjustable ring aperture, preferably motorized or piezo based aperture, and/or a Spatial Light Modulator (SLM), and/or a micro-opto-mechanic mirror system (MEMS) and/or an electrical aperture or screen, and/or liquid apertures or liquid lenses, and/or electro-optical modulator (EOM) or acousto-optical modulator (AOM).
